# EUROPÄISCHE PATENTSCHRIFT

(11) **EP 0 889 646 B1**
(45) Veröffentlichungstag und Bekanntmachung des Hinweises auf die Patenterteilung: **15.02.2006**
(21) Anmeldenummer: 98202144.6
(22) Anmeldetag: 26.06.1998
(51) Int. Cl.: H04N 5/44, H04N 5/46

(54) **Fernsehsignal-Empfänger**
Television signal receiver
Récepteur de signal de télévision

(30) Priorität: 03.07.1997 DE 19728315
(43) Veröffentlichungstag der Anmeldung: 07.01.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Ruitenburg, Leo, c/o Philips Patenverwalting GmbH., 22335 Hamburg (DE)
(74) Vertreter: von Laue, Hanns-Ulrich

(56) Entgegenhaltungen:
- WO-A-97/29590
- US-A- 4 316 220
- US-A- 5 673 088

## Beschreibung

Die Erfindung betrifft einen Fernsehsignal-Empfänger mit einem Hochfrequenztuner und mit wenigstens zwei diesem nachgeschalteten Oberflächenwellenfiltern, wobei der Hochfrequenztuner ein ihm eingangsseitig zugeführtes HF-Fernsehsignal ausfiltert und auf ein Zwischenfrequenz-Fernsehsignal umsetzt, welches auf die Oberflächenwellenfilter gekoppelt ist.

Derartige Fernsehsignal-Empfänger sind insbesondere für den Empfang von HF-Fernsehsignalen verschiedener Übertragungsnormen mit mehreren Oberflächenwellenfiltern ausgerüstet. CN 1131 855 A beschreibt einen derartigen Fernschsignal-Empfänger. Dabei wird mittels den Oberflächenwellenfiltern zugeordneter Schalter eine Aktivierung oder Deaktivierung dieser Oberflächenwellenfilter vorgenommen. Es gibt auch Konzepte, bei denen die Filtercharakteristik der Oberflächenwellenfilter dadurch umgeschaltet wird, daß verschiedene Eingänge der Oberflächenwellenfilter auf ein Bezugspotential geschaltet werden. Der Nachteil beider Konzepte besteht in der Vielzahl der notwendigen Schalter und des damit verbundenen baulichen Aufwandes.

Es ist Aufgabe der Erfindung, den Schaltungsaufwand für einen derartigen Fernsehsignal-Empfanger für Multistandardempfang zu verringern.

Diese Aufgabe ist erfindungsgemäß dadurch gelöst, daß der Hochfrequenztuner wenigstens zwei Ausgänge aufweist, die das auf die Zwischenfrequenz umgesetzte ZF-Fernsehsignal liefern, daß jedem Ausgang jeweils ein Schalter zugeordnet ist, mittels dessen der zugeordnete Ausgang auf ein festes Bezugspotential schaltbar ist, daß dem Hochfrequenztuner wenigstens zwei Oberflächenwellenfilter nachgeschaltet sind, wobei jeweils ein erster Eingang beider Oberflächenwellenfilter mit einem ersten Ausgang des Hochfrequenztuners und jeweils ein zweiter Eingang beider Oberflächenwellenfilter mit einem zweiten Ausgang des Hochfrequenztuners gekoppelt ist, und daß zur Umschaltung der Filtercharakteristik des Fernsehsignal-Empfängers alternativ jeweils einer der Ausgänge des Hochfrequenztuners und die mit ihm gekoppelten Eingänge der Oberflächenwellenfilter mittels des zugeordneten Schalters auf das Bezugspotential koppelbar ist.

Bei diesem erfindungsgemäßen Konzept weist der Hochfrequenztuner wenigstens zwei Ausgänge auf, die beide das auf die Zwischenfrequenz umgesetezte HF-Fernsehsignal liefern. Jedem der Ausgänge ist jeweils ein Schalter zugeordnet, mittels dessen der zugeordnete Ausgang auf Bezugspotential schaltbar ist.

Nachgeschaltete Oberflächenwellenfilter sind, beispielsweise bei einem Konzept mit zwei Ausgängen des HF-Tuners, mit jeweils einem ihrer Eingänge mit einem Ausgang des HF-Tuners verbunden. Damit gestatten die den Ausgängen des HF-Tuners zugeordneten Schalter eine Umschaltung bzw. Ein/Ausschaltung der Oberflächenwellenfilter, je nach deren Bauart. Es kann auf diese Weise eine Umschaltung der Filtercharakteristik des Fernsehsignal-Empfängers vorgenommen werden, wozu lediglich die beiden den Ausgängen zugeordneten Schalter benötigt werden.

Bei aktivierten Schaltern ist der jeweils zugeordnete Ausgang niederohmig und erlaubt damit neben der Deaktivierung dieses Ausganges gleichzeitig eine Umschaltung oder Ein/Ausschaltung der nachgeschalteten Oberflächenwellenfilter.

Damit wird einerseits eine Reduzierung der Zahl der erforderlichen Schalter erreicht, andererseits können diese, da sie den Ausgängen des HF-Tuners zugeordnet sind, zusammen mit diesem aufgebaut werden.

Gemäß einer Ausgestaltung der Erfindung ist vorgesehen, daß wenigstens eines der Oberflächenwellenfilter so ausgelegt ist, daß sich seine Filtercharakteristik abhängig davon ändert, welcher seiner Eingänge mit Bezugspotential gekoppelt ist, und daß mittels der den Ausgängen des Hochfrequenztuners zugeordneten Schaltern eine Umschaltung der Filtercharakteristik des Oberflächenwellenfilters vornehmbar ist.

Oberflächenwellenfilter dieser Bauart weisen zwei Eingänge auf, die grundsätzlich beide mit zu filternden Signalen belegt werden können. Alternativ muß jedoch einer der Eingänge auf ein Bezugspotential gelegt werden, was zur Umschaltung der Filtercharakteristik des Oberflächenwellenfilters führt. Der andere Eingang bleibt dann aktiver Eingang, dessen Eingangssignal mit der entsprechend eingeschalteten Filtercharakteristik gefiltert wird. In dem erfindungsgemäßen Fernsehsignal-Empfänger sind derartige Filter mit jeweils einem ihrer Eingänge mit einem der Ausgänge, die niederohmig schaltbar sind, verbunden. Durch die alternative Aktivierung der den Ausgängen des HF-Tuners zugeordneten Schaltern wird die Umschaltung der Filtercharakteristik eines derartigen Oberflächenfilters in einfacher Weise vorgenommen.

Für eine weitere Ausgestaltung der Erfindung ist vorgesehen, daß wenigstens eines der Oberflächenwellenfilter so ausgelegt ist, daß das Filter abhängig davon, welcher seiner Eingänge mit Bezugspotential gekoppelt ist, sperrbar ist und daß mittels der den Ausgängen des Hochfrequenztuners zugeordneten Schaltern eine Sperrung des Oberflächenwellenfilters vornehmbar ist. Bei diesem Schaltertyp kann durch die den Ausgängen des HF-Tuners zugeordneten Schalter eine Ein/Ausschaltung des Oberflächenwellenfilters vorgenommen werden, das auf diese Weise also mittels der Schalter sperrbar oder aktivierbar ist.

Gegebenenfalls können in einer erfindungsgemäßen Schaltungsanordnung Oberflächenwellenfilter beider dieser Typen kombiniert eingesetzt werden. Es ergibt sich damit für den erfindungsgemäßen Fernsehsignal-Empfänger auch bei komplexem Aufbau, d.h. einer Vielzahl derartiger Filter bzw. umschaltbarer Fitlercharakteristiken, dennoch ein geringer Schaltungsaufwand, da nur so viele Schalter notwendig sind, wie Ausgänge des HF-Tuners vorgesehen sind.

Dieser Vorteil des erfindungsgemäßen Fernsehsignal-Empfängers tritt insbesondere dann in Erscheinung, wenn zwischen einer Vielzahl von Filtercharakterístiken umgeschaltet werden muß. Dies ist beispielsweise bei Multistandard-Fernsehempfängern der Fall, bei denen die Oberflächenwellenfilter auf jedes der empfangbaren Femsehsignale der verschiedenen Normen einstellbar sein muß.

Hierzu ist gemäß einer weiteren Ausgestaltung der Erfindung vorgesehen, daß es sich bei dem Fernsehsignal-Empfänger um einen Multistandard-Femsehsignal-Empfänger zum Empfang von Fernsehsignalen verschiedener Übertragungsnormen handelt und daß die Umschaltung zwischen den Oberflächenwellenfiltern bzw. zwischen deren Filtercharakteristiken zur Anpassung an ZF-Fernsehsignale verschiedener Übertragungsnormen mittels der Schalter vornehmbar ist.

Die durch den erfindungsgemäßen Fernsehsignal-Empfänger erreichte Vereinfachung des Schaltungsaufbaus kann dadurch weiter gesteigert werden, daß, wie gemäß einer weiteren Ausgestaltung vorgesehen ist, der HF-Tuner mit seinen beiden Ausgängen und die diesen zugeordneten Schalter auf einem integrierten Schaltkreis aufgebaut sind.

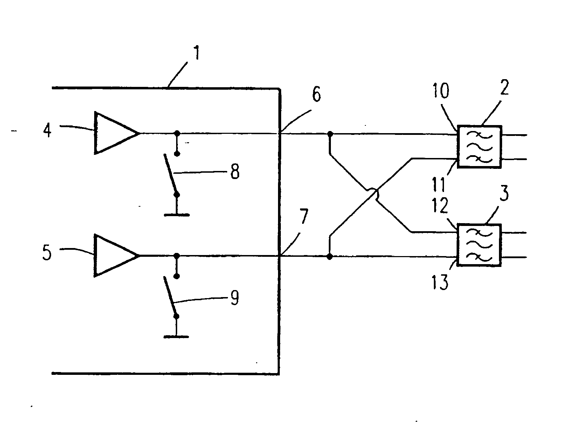

Nachfolgend wird ein Ausführungsbeispiel der Erfindung anhand des in der Zeichnung dargestellten Prinzipschaltbildes näher erläutert.

Die einzige Zeichnung zeigt einen erfindungsgemäßen Fernsehsignal-Empfänger mit einem HF-Tuner 1, der nur teilweise dargestellt ist.

Die Zeichnung zeigt in dem Hochfrequenztuner 1 einen Ausgangsverstärker 4, der ein Zwischenfrequenz-Fernsehsignal liefert. Dieses Zwischenfrequenz-Fernsehsignal wurde in in der Figur nicht angedeuteter Weise aus einem dem HF-Tuner eingangsseitig zugeführten HF-Fernsehsignal durch Umsetzung auf die Zwischenfrequenzebene gewonnen.

Ein zweiter, in dem HF-Tuner 1 vorgesehener Verstärker 5 liefert das gleiche ZF-Fernsehsignal.

Dem ersten Verstärker 4 ist ein erster Schalter 8 zugeordnet, mittels dessen das von dem Verstärker 4 ausgangsseitig geführte ZF-Fernsehsignal mit Bezugspotential koppelbar ist. Ein erster Ausgang 6 des HF-Tuners ist mit dem Ausgang des Verstärkers 4 und mit dem Schalter 8 gekoppelt. Mittels des Schalters 8 kann der Ausgang 6 so geschaltet werden, daß er alternativ das ZF-Fernsehsignal führt oder niederohmig gegen Bezugspotential geschaltet ist.

Dem zweiten Verstärker 5 ist ein Schalter 9 zugeordnet, mittels dessen in gleicher Weise ein dem Verstärker 5 zugeordneter zweiter Ausgang 7 des HF-Tuners 1 alternativ auf das ZF-Fernsehsignal oder niederohmig auf Bezugspotential schaltbar ist.

Damit können mittels der Schalter 8 und 9 die Ausgänge 6 und 7 des HF-Tuners 1 einzeln so geschaltet werden, daß sie entweder das ZF-Fernsehsignal führen oder daß sie niederohmig gegen das Bezugspotential geschaltet sind.

Der in der Zeichnung dargestellte Fernsehsignal-Empfänger weist außerdem zwei Oberflächenwellenfilter 2 und 3 auf.

Das erste Oberflächenwellenfilter 2 weist einen ersten Eingang 10 auf, der mit dem ersten Ausgang 6 des HF-Tuners 1 gekoppelt ist. Das erste Oberflächenwellenfilter 2 weist ferner einen zweiten Eingang 11 auf, der mit dem zweiten Ausgang 7 des HF-Tuners 1 gekoppelt ist.

In entsprechender Weise ist ein erster Eingang 12 des zweiten Oberflächenwellenfilters 3 mit dem ersten Eingang 5 des HF-Tuners und ein zweiter Eingang 13 dieses Oberflächenwellenfilters mit dem zweiten Ausgang 7 des HF-Tuners 1 gekoppelt.

Die beiden Oberflächenwellenfilter 2 und 3 sind verschiedener Bauart.

Das erste Oberflächenwellenfilter 2 ist so gestaltet, daß seine Filtercharakteristik abhängig davon umgeschaltet wird, welcher seiner Eingänge 10 oder 11 auf Bezugspotential geschaltet ist. Ist beispielsweise der Schalter 8 aktiviert und damit der erste Eingang des Oberflächenwellenfilters 2 auf Bezugspotential geschaltet, so wird das dem Oberflächenwellenfilter 2 an seinem zweiten Eingang 11 zugeführte Signal einer ersten Filtercharakteristik gefiltert. Ist hingegen der Schalter 9 aktiviert und damit der zweite Eingang 11 des Oberflächenwellenfilters 2 auf Bezugspotential geschaltet, so wird das dem Oberflächenwellenfilter 2 an seinem ersten Eingang 10 zugeführte Signal mit einer zweiten Filtercharakteristik gefiltert.

Dieses Beispiel zeigt, daß durch Umschaltung der Schalter 8 bzw. 9 an den Ausgängen des HF-Tuners 1 die Filtercharakterstik des Oberflächenwellenfilters 2 umschaltbar ist.

Die Schalter 8 und 9 können jedoch außerdem dazu eingesetzt werden, das Oberflächenwellenfilter 3 ein- bzw. auszuschalten. Das Oberflächenwellenfilter 3 ist anderer Bauart als das Oberflächenwellenfilter 2. Das Oberflächenwellenfilter 3 kann abhängig davon, ob sein zweiter Eingang 13 auf. Bezugspotential geschaltet ist oder nicht, aktiviert bzw. deaktiviert werden.

Ist also der Schalter 9 aktiviert und damit der zweite Eingang des Oberflächenwellenfilters 3 auf Bezugspotential geschaltet, so ist dieses Filter gesperrt. Ist hingegen der Schalter 8 aktiviert und der Schalter 9 offen, so filtert das Oberflächenwellenfilter 3 die ihm an seinem zweiten Eingang 13 zugeführten Signale und stellt sie ausgangsseitig in gefilterter Form zur Verfügung.

Schon aus diesem einfachen Beispiel ist ersichtlich, daß die Schalter 8 und 9 mehrere Funktionen auslösen können. Insbesondere können mittels der Schalter mehrere Oberflächenwellenfilter in ihrer Filtercharakteristik umgeschaltet werden oder aktiviert bzw. deaktiviert werden. Damit tritt eine Verminderung der Zahl der Schalter gegenüber Schaltungsanordnungen nach dem Stande der Technik ein. Durch die Zuordnung der Schalter zu den Ausgängen 6 bzw. 7 des HF-Tuners bzw. zu dessen Verstärkern 4 bzw. 5 sind die Schalter gemeinsam mit diesen Verstärkern, gegebenenfalls integrierter Form, aufbaubar, wodurch eine weitere Vereinfachung eintritt.

## Patentansprüche

1. Fernsehsignal-Empfänger mit einem Hochfrequenztuner (1) und mit wenigstens zwei diesem nachgeschalteten Oberflächenwellenfiltern (2,3), wobei der Hochfrequenztuner (1) ein ihm eingangsseitig zugeführtes HF-Fernsehsignal ausfiltert und auf ein Zwischenfrequenz-Fernsehsignal umsetzt, welches auf die Oberflächenwellenfilter (2,3) gekoppelt ist,
**dadurch gekennzeichnet,**
**daß** der Hochfrequenztuner (1) wenigstens zwei Ausgänge (6,7) aufweist, die das auf die Zwischenfrequenz umgesetzte ZF-Fernsehsignal liefern,
**daß** jedem Ausgang (6,7) jeweils ein Schalter (8;9) zugeordnet ist, mittels dessen der zugeordnete Ausgang (6;7) auf ein festes Bezugspotential schaltbar ist,
**daß** dem Hochfrequenztuner (1) wenigstens zwei Oberflächenwellenfilter (2,3) nachgeschaltet sind, wobei jeweils ein erster Eingang (10;12) beider Oberflächenwellenfilter (2,3) mit einem ersten Ausgang (6) des Hochfrequenztuners (1) und jeweils ein zweiter Eingang (11;13) beider Oberflächenwellenfilter (2,3) mit einem zweiten Ausgang (7) des Hochfrequenztuners (1) gekoppelt ist,
und **daß** zur Umschaltung der Filtercharakteristik des Fernsehsignal-Empfängers alternativ jeweils einer der Ausgänge (6;7) des Hochfrequenztuners (1) und die mit ihm gekoppelten Eingänge (10,12;11,13) der Oberflächenwellenfilter (2,3) mittels des zugeordneten Schalters (8;9) auf das Bezugspotential koppelbar ist.

2. Fernsehsignal-Empfänger nach Anspruch 1, **dadurch gekennzeichnet, daß** wenigstens eines der Oberflächenwellenfilter (2) so ausgelegt ist, daß sich seine Filtercharakteristik abhängig davon ändert, welcher seiner Eingänge (10,11) mit Bezugspotential gekoppelt ist, und daß mittels der den Ausgängen (6,7) des Hochfrequenztuners (1) zugeordneten Schaltern (8,9) eine Umschaltung der Filtercharakteristik des Oberflächenwellenfilters (2) vornehmbar ist.

3. Fernsehsignal-Empfänger nach Anspruch 1 oder 2, **dadurch gekennzeichnet, daß** wenigstens eines der Oberflächenwellenfilter (3) so ausgelegt ist, daß das Filter (3) abhängig davon, welcher seiner Eingänge (12,13) mit Bezugspotential gekoppelt ist, sperrbar ist und daß mittels der den Ausgängen (6,7) des Hochfrequenztuners (1) zugeordneten Schaltern (8,9) eine Sperrung des Oberflächenwellenfilters (3) vornehmbar ist.

4. Fernsehsignal-Empfänger nach Anspruch 1, **dadurch gekennzeichnet, daß** es sich bei dem Fernsehsignal-Empfänger um einen Multistandard- Fernsehsignal-Empfänger zum Empfang von Fernsehsignalen verschiedener Übertragungsnormen handelt und daß die Umschaltung zwischen den Oberflächenwellenfiltern (2,3) bzw. zwischen deren Filtercharakteristiken zur Anpassung an ZF-Fernsehsignale verschiedener Übertragungsnormen mittels der Schalter (8,9) vornehmbar ist.

5. Fernsehsignal-Empfänger nach einem der Ansprüche 1 bis 4, **dadurch gekennzeichnet, daß** der Hochfrequenztuner (1) mit seinen beiden Ausgängen (6,7) und die diesen zugeordneten Schalter (8,9) auf einem integrierten Schaltkreis aufgebaut sind.

6. Fernsehgerät mit einem Fernsehsignal-Empfänger nach einem der Ansprüche 1 bis 5.

7. Videorekorder mit einem Fernsehsignal-Empfänger nach einem der Ansprüche 1 bis 5.

## Claims

1. A television signal receiver comprising a radio-frequency tuner (1) and at least two subsequent surface-acoustic wave filters (2, 3), in which the radio-frequency tuner (1) filters a RF television signal applied to its input and converts it to an intermediate-frequency television signal which is coupled to the surface-acoustic wave filter (2, 3), **characterized in that** the radio-frequency tuner (1) has at least two outputs (6, 7) which supply the RF television signal converted to the intermediate frequency, **in that** each output (6, 7) is associated with a switch (8; 9) by means of which the associated output (6; 7) is switchable to a fixed reference potential, **in that** the radio-frequency tuner (1) precedes at least two surface-acoustic wave filters (2, 3), in which each time a first input (10; 12) of the two surface-acoustic wave filters (2, 3) is coupled to a first output (6) of the radio-frequency tuner (1), and a second input (11; 13) of the two surface-acoustic wave filters (2, 3) is coupled to a second output (7) of the radio-frequency tuner (1), and **in that**, for switching the filter characteristic of the television signal receiver, alternately one of the outputs (6; 7) of the radio-frequency tuner (1) and the inputs (10, 12; 11, 13) coupled thereto of the surface-acoustic wave filters (2, 3) can be coupled to the reference potential by means of the associated switch (8; 9).

2. A television signal receiver as claimed in claim 1, **characterized in that** at least one of the surface-acoustic wave filters (2) is implemented in such a way that its filter characteristic changes in dependence upon which of its inputs (10, 11) is coupled to reference potential, and **in that** the filter characteristic of the surface-acoustic wave filter (2) is switchable by means of the switches (8, 9) associated with the outputs (6, 7) of the radio-frequency tuner (1).

3. A television signal receiver as claimed in claim 1 or 2, **characterized in that** at least one of the surface-acoustic wave filters (3) is implemented in such a way that the filter (3) can be cut off in dependence upon which of its inputs (12, 13) is coupled to reference potential, and **in that** the surface-acoustic wave filter (3) can be cut off by means of the switches (8, 9) associated with the outputs (6, 7) of the radio-frequency tuner (1).

4. A television signal receiver as claimed in claim 1, **characterized in that** said television signal receiver is a multistandard television signal receiver for receiving television signals of different transmission standards, and **in that** the surface-acoustic wave filters (2, 3) and their filter characteristics for adaptation to IF television signals of different transmission standards are switchable by means of the switches (8, 9).

5. A television signal receiver as claimed in any one of claims 1 to 4, **characterized in that** both outputs (6, 7) and the associated switches (8, 9) of the radio-frequency tuner (1) are implemented on an integrated circuit.

6. A television apparatus including a television signal receiver as claimed in any one of claims 1 to 5.

7. A video recorder including a television signal receiver as claimed in any one of claims 1 to 5.

## Revendications

1. Récepteur de signal de télévision doté d'un syntoniseur de haute fréquence (1) et d'au moins deux filtres à ondes de surface (2,3) montés en aval de celui-ci, le syntoniseur de haute fréquence (1) filtrant un signal de télévision HF qui lui est amené côté entrée et le convertissant à un signal de télévision de fréquence intermédiaire qui est couplé avec les filtres à ondes de surface (2,3),
**caractérisé en ce**
**que** le syntoniseur de haute fréquence (1) possède au moins deux sorties (6,7) qui fournissent le signal de télévision FI converti sur la fréquence intermédiaire,
**qu'**à chaque sortie (6,7) est attribué à chaque fois un commutateur (8,9), au moyen duquel la sortie attribuée (6;7) est commutable sur un potentiel de référence fixe,
**qu'**au moins deux filtres à ondes de surface (2,3) sont montés en aval du syntoniseur de haute fréquence (1), une première entrée (10;12) des deux filtres à ondes de surface (2,3) étant couplée à chaque fois avec une première sortie (6) du syntoniseur de haute fréquence (1) et une deuxième entrée (11; 13) des deux filtres à ondes de surface (2,3) à chaque fois avec une deuxième sortie (7) du syntoniseur de haute fréquence (1),
et **que** pour la commutation de la caractéristique de filtrage du récepteur de signal de télévision, une des entrées (6;7) du syntoniseur de haute fréquence (1) et les entrées (10,12;11,13) des filtres à ondes de surface (2,3), couplées à celles-ci, peuvent à chaque fois être couplées alternativement avec le potentiel de référence au moyen du commutateur attribué (8;9).

2. Récepteur de signal de télévision selon la revendication 1, **caractérisé en ce qu'**au moins un des filtres à ondes de surface (2) est conçu de sorte que sa caractéristique de filtrage change selon celle de ses entrées (10,11) qui est couplée avec le potentiel de référence et qu'une commutation de la caractéristique de filtrage du filtre à ondes de surface (2) puisse être effectuée au moyen des commutateurs attribués (8,9) aux sorties (6,7) du syntoniseur de haute fréquence (1).

3. Récepteur de signal de télévision selon la revendication 1 ou 2, **caractérisé en ce qu'**au moins un des filtres à ondes de surface (3) est conçu de sorte que le filtre (3) puisse être bloqué selon celle de ses entrées (12,13) qui est couplée avec le potentiel de référence, et qu'un blocage du filtre à ondes de surface (3) peut être effectué au moyen des commutateurs (8,9) attribués aux sorties (6,7) du syntoniseur de haute fréquence (1).

4. Récepteur de signal de télévision selon la revendication 1, **caractérisé en ce que** le récepteur de signal de télévision est un récepteur de signal de télévision multistandard afin de capter des signaux de télévision de diverses normes de transmission et que la commutation entre les filtres à ondes de surface (2,3) ou entre leurs caractéristiques de filtrage peut être effectuée à l'aide des commutateurs (8, 9) pour l'adaptation à des signaux de télévision FI de diverses normes de transmission.

5. Récepteur de signal de télévision selon l'une des revendications 1 à 4, **caractérisé en ce que** le syntoniseur de haute fréquence (1) doté de ses deux sorties (6,7) et les commutateurs (8, 9) attribués à ces derniers sont conçus sur un circuit intégré.

6. Téléviseur doté d'un récepteur de signal de télévision selon l'une des revendications 1 à 5.

7. Magnétoscope doté d'un récepteur de signal de télévision selon l'une des revendications 1 à 5.
